## Europäisches Patentamt

## European Patent Office

## Office européen des brevets

(19)

(11) Publication number: **0 088 645**
**B1**

(12) **EUROPEAN PATENT SPECIFICATION**

(45) Date of publication of patent specification: **28.10.87**

(51) Int. Cl.⁴: **B 23 Q 7/00, B 23 Q 3/157, B 23 Q 39/04**

(21) Application number: **83301334.5**

(22) Date of filing: **10.03.83**

(54) Machine tool.

(30) Priority: **10.03.82 GB 8206952**

(43) Date of publication of application:
**14.09.83 Bulletin 83/37**

(45) Publication of the grant of the patent:
**28.10.87 Bulletin 87/44**

(84) Designated Contracting States:
**CH DE FR GB IT LI SE**

(56) References cited:
**EP-A-0 060 638**
**FR-A-1 389 246**
**FR-A-2 003 807**
**FR-A-2 508 362**
**GB-A-1 083 742**
**GB-A-1 202 364**
**GB-A-1 263 912**
**US-A-2 555 963**
**US-A-4 000 954**

(73) Proprietor: **Renishaw plc**
**Gloucester Street**
**Wotton-Under-Edge Gloucestershire GL12 7DN**
**(GB)**

(72) Inventor: **McMurtry, David Roberts**
**'Undercroft' Tabernacle Pitch**
**Wotton-Under-Edge Glos. (GB)**

(74) Representative: **Waite, John**
**Renishaw plc Gloucester Street**
**Wotton-Under-Edge Glocs. GL12 7DN (GB)**

Courier Press, Leamington Spa, England.

## Description

Background of the Invention

This invention relates to a machine tool adapted for the automatic transmission of workpieces between a work support and a spindle.

United Kingdom Patent No. 1,263,912 (GB—A—1263912) describes a machine tool comprising a spindle, a first pallet on which workpieces are held, and a second pallet on which a chuck is held. It is recited that the spindle can receive the chuck from the second pallet and then receive a workpiece from the first pallet. Thus a workpiece is transferrable from the first pallet to a spindle-mounted workholder. The transfer does of course involve relative movement of the spindle and a support on which the pallets are mounted.

There may be a requirement to machine that portion of the workpiece which is held by the chuck and which is therefore not at first accessible. To cope with this requirement GB—A—1263912 mentions a turn-round device mounted on the support. The workpiece is delivered by a said relative movement to the turn-round device which turns the workpiece end-to-end for reception of the first-machined portion by the chuck and exposure of the previously held portion.

GB—A—1263912 also describes a third pallet to which are secured "fixed" tools for lathe-type operations on a workpiece held by said chuck, and a fourth pallet for "live" tools for machining a workpiece held still by the chuck. There is also a fifth pallet providing a magazine for tools to be received by the spindle for machining workpieces secured to a sixth pallet. Thus the known machine is operable in either of two modes, viz. the machining of a spindle-mounted workpiece by pallet-mounted tools or the machining, by means of a spindle-mounted tool, of workpieces held securely on a pallet. All the foregoing provides the known machine with considerable versatility. However, there is no provision for transferring a workpiece automatically between said two modes. This limits the flexibility of the known machine especially as regards machining operations at each end of the workpiece, and said turn-round device is needed for such operations.

The turn-round device would have to have a holder to which the workpiece is transferred from the spindle-mounted chuck, and the device would further have to have a motor for rotating the holder so that another side or end of the workpiece is presented for transfer back to the chuck. Such a device and such transfer are not always appropriate or cost-effective for particular machining cycles.

The invention as claimed herein overcomes or reduces the above limitations in that it provides automatically operable means for gripping and releasing a workpiece not only on one but on each of a first and a second workholding means provided respectively on a spindle and on a support. By virtue of this, a workpiece, held at one end by the workholding means of the spindle for machining by a tool provided on the support, can be transferred to the workholding means of the support for the other end of the workpiece to be gripped and said one end to become accessible for machining by a tool to be provided on the spindle.

In GB—A—1263912, while the spindle-mounted chuck may be inferred to be an automatically operable means for gripping and releasing a workpiece, no such inference can be made in respect of any pallet on which a workpiece is supported, and accordingly it is not possible in the known machine to change automatically between machining the respective said ends of the workpiece without the use of a turn-round device.

FR—A—2508362 shows suction holders operable for transfer of components from a storage location to an assembly station. EP—A—0060638, GB—A—1083742, GB—A—1202364, FR—A—1389246 and US—A—4000954 show transfer of tools directly from a magazine to a spindle. US—A—3555963 shows a table movable relative to a frame and adapted to support a work pallet as well as a tool pallet, the latter pallet being transferrable to the frame for machining the work on the work pallet.

The combination of a spindle with a workholder which can be operated automatically to grip or release a workpiece, and which can itself be automatically attached to or released from the spindle, is shown in our EP—A—88646 of same date as the present application.

Further reference is made to our EP—A—88644 also of same date as the present application.

Brief Description of the Drawings

Preferred embodiments of a machine tool according to this invention will now be described, by way of example, with reference to the accompanying drawings wherein:

Fig. 1 is a front elevation of a first embodiment of the machine tool,

Fig. 2 is a plan view of Fig. 1 drawn diagrammatically and to a reduced scale, and

Fig. 3 is a view similar to Fig. 2 but showing a second embodiment.

Detailed Description of Preferred Embodiments

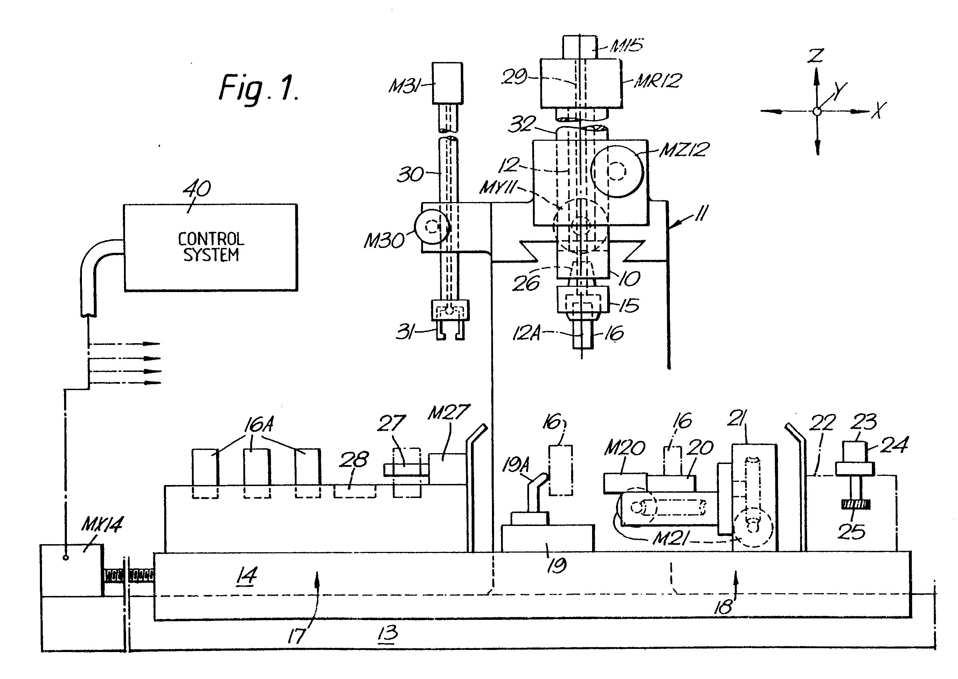

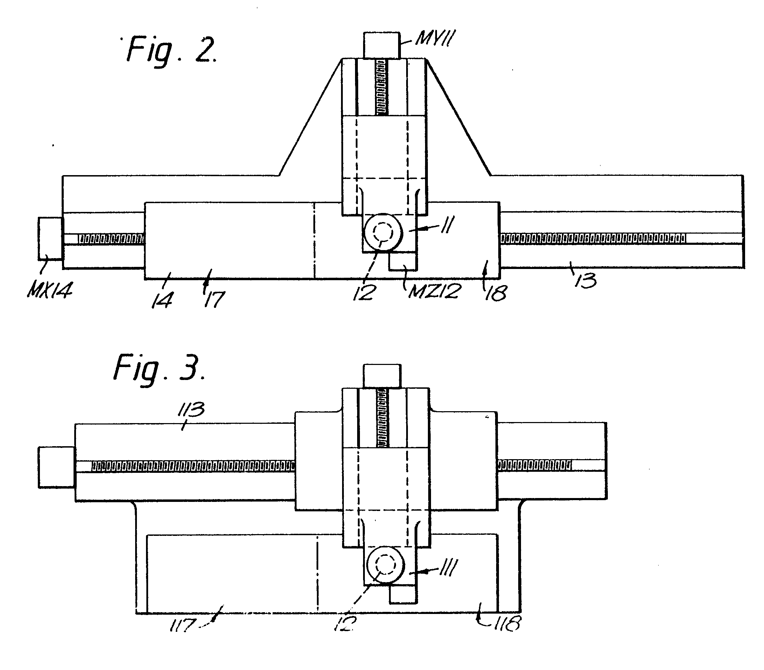

Referring to Figs. 1 and 2, the machine tool comprises a head 10 supported on a first support member or headstock 11 by a spindle 12. The spindle 12 is supported for rotation in an arbor 32 and is rotatable by a motor MR12 about an axis 12A. The arbor is movable in the direction of the axis 12A, i.e. in the Z-direction, by a motor MZ12. The headstock 11 is secured to a bed 13 and is movable relative thereto in the Y-direction by a motor MY11. A second support member or table 14 is supported on the bed for movement in the X-direction and is movable in that direction by a motor MX14. The head has releasably secured thereto the work holder 15 having a tapered spigot 26 for engagement with the head 10. The work holder is operable by a motor M15, acting through an operating rod 29, to grip or release a workpiece 16. The table 14 comprises two parts being respectively a machining support 18 and a storage support or magazine 17. The magazine 17 supports a plurality of workpiece blanks 16A. The support 18 has secured thereto a tool mount 19 to which is secured at least one turning tool 19A and a dividing head 21 operable by motors M21 and supporting a chuck 20 operable by a motor M20 for gripping and releasing a workpiece. The support 18 also embodies a tool storage magazine 22 releasably supporting at least one milling tool 23. The tool 23 has at one end a milling cutter 25 and at the other end a spigot 24 dimensioned for being gripped by the holder 15. The table 14 also contains a holder 27 for reversing a said workpiece end-to-end and operable by a motor M27. The table 14 constitutes a common structure for the supports 17, 18, 22. The machine tool is operated by a numerical control system 40 programmed to act on the motors, generally referred to by the letter M, in a predetermined sequence comprising the following operations:

1. Moving the head 10 and the bed 14 relative to one another (motors MY11, MZ12, MX14) to bring the holder 15 into register with one of the blanks 16A in the magazine 17.

2. Gripping the blank 16A (Motors MZ12, M15).

3. Moving the head 10 into proximity with the tool 19A (Motors MY11, MZ12, MX14).

4. Rotating the spindle 12 (Motor MR12) to rotate the blank 16A relative to the tool 19 for a turning operation.

5. Moving the head and the bed relative to one another (Motors MZ12, MX14) to provide for feed and depth of cut in said turning operation.

The system 40 is further programmed, on completion of the above turning operation, to return the workpiece 16 to the magazine 17 and repeat the cycle for the next blank.

The system 25 may be programmed to perform a milling operation by moving the head 10 to insert the workpiece 16 into the chuck 20 operating the chuck motor M20 to grip the workpiece, moving the head 10 to the tool 23, operating the holder 15 to grip the tool 23, moving the head 10 to move the tool 23 to the workpiece 16 held in the chuck 20, and rotating the spindle 12 and moving the head 10 to carry out the milling operation.

Means may be provided for automatically releasing the holder 15 from the head 10 and securing it thereto. To this end the motor M15 may be adapted to engage the narrow end of the tapered spigot 26 of the holder 15 and draw the spigot into a receiving socket in the head, the motor acting through the intermediary of the rod 29. Apparatus for automatically securing a work holder or a tool holder to a spindle and releasing it therefrom, and further comprising means for automatically operating the work holder to grip and release a workpiece, is shown in my/our British Patent Application No. 8206951 and European Patent Application No. 83301335.2. The tool 23 may be adapted to be released and secured to the head 10 in the same way as the holder 15, the spigot 23 then being tapered in the same way as the spigot 26. The system may be programmed to move the head 10 to deposit the holder 15 in a storage socket 28 on the work support 17 and pick up the tool 23 for the latter to take the place of the holder 15 in the head 10.

In a modification, also shown in Fig. 1, an arbor 30 is supported on the headstock 11 for movement toward and away from the table 14 by a motor M30. The arbor 30 has at one end a gripper 31 operable by a motor M31 to grip or release a workpiece. In operation, the workpieces are transferred between the magazine 17 and the chuck 20 by means of the gripper 31, the spindle 12 being used for supporting a tool, e.g. the tool 23, either in the holder 15 or by means of a spigot such as 26. The arbor 30 and gripper 31 can be a relative light structure compared to the spindle 12 which has to sustain the machining forces.

In the embodiment shown in Fig. 3, a magazine 117 and a machining support 118 are stationary, and a headstock 111 is movable on a track 113 along the magazine 117 and support 118 for the purpose of transferring workpieces therebetween. The magazine 117 can be arranged to include a tray or palette containing the workpieces and being removable from a supporting surface of the magazine. Also the support 118 can be to some extent movable relative to the magazine for the purpose of machining operations. However essentially, i.e. for the purpose of the transfer operation, the magazine and the support 118 are stationary.

Reference is made to the divisional applications EP—A—0215208 and EP—A—0215209 in which subject matter described herein is claimed.

**Claims**

1. Machine tool comprising
a) a spindle (12),
b) first workholding means (15) provided on the spindle (12),
c) first toolholding means (15, 26) provided on the spindle (12),
d) a support (14),
e) second workholding means (20) provided on the support (14),
f) second toolholding means (19) provided on the support (14), and
g) the spindle (12) and the support (14) being relatively moveable for machining a workpiece (16) held by the first workholding means (15) by means of a tool (19A) held by the second tool holding means or machining a workpiece (16) held by the second workholding means (20) by means of a tool (25) held by the first toolholding means (15, 26),
characterised in that
h) each of said workholding means (15, 20) comprises automatically operable means for gripping and releasing a workpiece (16), and that
i) there is provided transfer means (40, M15, M20, MX14, MY11, MZ12) for automatically operating the respective workholding means (15, 20) and relatively moving the spindle (12) and the support (14) to transfer a workpiece (16) between the respective workholding means (15, 20).

2. Apparatus according to claim 1 including rotating means (M21) for rotating said second workholding means (20).

3. Apparatus according to claim 2 wherein said rotating means (M21) comprise a dividing head (21).

4. Apparatus according to claim 1 including a device (15) releasably holding a said workpiece (16) or a said tool (23).

5. Apparatus according to claim 4 including means (26, 29) for releasably securing a workholder (15) or a tool holder (24) to said spindle (12).

6. Apparatus according to claim 4 or claim 5 wherein said support includes storage means (28 or 22) for storing said workholder (15) or toolholder (24), and wherein said transfer means (40, M15, MX14, MY11, MZ12) is adapted to transfer said workholder (15) or toolholder (24) between said spindle (12) and the respective said storage means (28 or 22).

7. Machine tool according to claim 1 further characterised by a magazine (17) for workpieces (16) and in that said transfer means (40, M15 or M15 and M20, MX14, MY11, MZ12) is operable to transfer of a said workpiece between said magazine (17) and either of said workholding means (15 or 20).

8. Machine tool according to claim 1, comprising

a) a magazine (17) for workpieces (16),

b) a headstock (11) for supporting said spindle (12),

c) third workholding means (31) mounted on the headstock (11) in a position distinct from the spindle (12) and including automatically operable means (31) for gripping and releasing a workpiece (16),

d) the headstock (11) being movable relative to said magazine (17) for transfer of a workpiece (16) between the magazine (17) and the second workholding means (20), and

e) transfer means (40, M31, M30, M20, MX14, MY11) for automatically operating the third workholding means (31) and moving the headstock (11) relative to the magazine (17) and the support (14) to transfer a said workpiece (16) between the magazine (17) and the second work-holding means (20).

9. Apparatus according to claim 7 or claim 8 wherein said support (14) includes said magazine (17) and said second workholding means (20) or second tool holding means (19), and said transfer means (MX14, MY11) is adapted to effect said relative movement both for machining and for transfer operations.

**Patentansprüche**

1. Werkzeugmaschine mit
a) einer Spindel (12),
b) einem an der Spindel (12) vorgesehenen ersten Werkstückhaltermittel (15),

c) einem an der Spindel (12) vorgesehenen ersten Werkzeughaltermittel (15, 26),
d) einem Support (14),
e) einem an dem Support (14) vorgesehenen zweiten Werkstückhaltermittel (20),
f) einem an dem Support (14) vorgesehenen zweiten Werkzeughaltermittel (19), und
g) wobei die Spindel (12) und der Support (14) relativ zueinander bewegbar sind zur Bearbeitung eines durch das erste Werkstückhaltermittel (15) gehaltenen Werkstückes (16) mittels eines durch das zweite Werkstückhaltermittel gehaltenen Werkzeuges (19A) oder zur Bearbeitung eines durch das zweite Werkstückhaltermittel (20) gehaltenen Werkstückes (16) mittels eines durch das erste Werkzeughaltermittel (15, 26) gehaltenen Werkzeuges (25),
dadurch gekennzeichnet, daß
h) jedes Werkstückhaltermittel (15, 20) automatisch betätigbare Mittel zum Greifen und Loslassen eines Werkstückes (16) umfaßt, und daß
i) ein Transfermittel (40, M15, M20, MX14, MY11, MZ12) vorgesehen ist zum automatischen Betätigen des jeweiligen Werkstückhaltermittels (15, 20) und zum Relativbewegen der Spindel (12) und des Supportes (14) zum Übertragen eines Werkstückes (16) zwischen den jeweiligen Werkstückhaltermitteln (15, 20).

2. Vorrichtung nach Anspruch 1, die Drehantriebsmittel (M21) einschließt, um zweite Werkstückhaltermittel (20) in Drehung zu versetzen.

3. Vorrichtung nach Anspruch 2, bei der das Drehantriebsmittel (M21) einen Teilerkopf (21) umfaßt.

4. Vorrichtung nach Anspruch 1, die ein Gerät (15) zum lösbaren Halten eines der genannten Werkstücke (16) oder eines der genannten Werkzeuge (23) enthält.

5. Vorrichtung nach Anspruch 4, die Mittel (26, 29) zum lösbaren Sichern eines Werkstückhalters (15) oder eines Werkzeughalters (24) an der Spindel (12) einschließt.

6. Vorrichtung nach Anspruch 4 oder 5, bei der der Support Speichermittel (28 oder 22) zum Speichern des Werkstückhalters (15) oder Werkzeughalters (24) enthält, und wobei das Übertragungsmittel (40, M15, MX14, MY11, MZ12) ausgelegt ist zum Übertragen des Werkstückhalters (15) oder des Werkzeughalters (24) zwischen der Spindel (12) und dem jeweiligen der Speichermittel (28 oder 22).

7. Werkzeugmaschine nach Anspruch 1, weiter gekennzeichnet durch ein Magazin (17) für Werkstücke (16) und dadurch, daß das Transfermittel (40, M15 oder M15 und M20, MX14, MY11, MZ12) zum Übertragen des Werkstückes zwischen dem Magazin (17) und jedem der Werkstückhaltermittel (15 oder 20) betätigbar ist.

8. Werkzeugmaschine nach Anspruch 1, mit
a) einem Magazin (17) für Werkstücke (16),
b) einem Spindelstock (11) zum Abstützen der Spindel (12),
c) dritten Werkstückhaltermitteln (31), an dem Spindelstock (11) in einer Stellung getrennt von der Spindel (12) angebracht und mit automatisch betätigbaren Mitteln (31) zum Ergreifen und Loslassen eines Werkstückes (16),

d) wobei der Spindelstock (11) relativ zu dem Magazin zum Übertragen eines Werkstückes (16) zwischen dem Magazin (17) und dem zweiten Werkstückhaltermittel (20) bewegbar ist, und

e) Transfermitteln (40, M31, M30, M20, MX14, MY11) zum automatischen Betätigen des dritten Werkstückhaltermittels (31) und zum Bewegen des Spindelstockes (11) relativ zu dem Magazin (17) und dem Support (14) zum Übertragen eines der genannten Werkstücke (16) zwischen dem Magazin (17) und dem zweiten Werkstückhaltermittel (20).

9. Vorrichtung nach Anspruch 7 oder 8, bei der der Support (14) das Magazin (17) und das zweite Werkstückhaltermittel (20) oder zweite Werkzeughaltermittel (19) enthält und das Transfermittel (MX14, MY11) ausgelegt ist, die Relativbewegung sowohl für Bearbeitungs- als auch für Übertragungs-Operationen zu bewirken.

**Revendications**

1. Machine-outil comprenant:

a) une broche (12),

b) un premier moyen porte-pièce (15) prévu sur la broche (12),

c) un premier moyen porte-outil (15, 26) prévu sur la broche (12),

d) un support (14),

e) un second moyen porte-pièce (20) prévu sur le support (14),

f) un second moyen porte-outil (19) prévu sur le support (14),

g) la broche (12) et le support (14) étant déplaçables l'un par rapport à l'autre pour l'usinage d'une pièce (16) tenue par le premier moyen porte-pièce (15) au moyen d'un outil (19A) tenu par le second moyen porte-outil ou pour l'usinage d'une pièce (16) tenue par le second moyen porte-pièce (20) au moyen d'un outil (25) tenu par le premier moyen porte-outil (15, 26),

caractérisé en ce que:

h) chacun desdits moyens porte-pièce (15, 20) comprend des moyens que l'on peut faire fonctionner automatiquement pour saisir ou lâcher une pièce (16),

i) et qu'il est prévu un moyen de transfert (40, M15, M20, MX14, MY11, MZ12) pour faire fonctionner automatiquement les moyens porte-pièce respectifs (15, 20) et pour faire subir un mouvement relatif à la broche (12) et au support (14) afin de transférer une pièce (16) entre les moyens porte-pièce respectifs (15, 20).

2. Appareil selon la revendication 1, comportant des moyens rotatifs (M21) pour faire tourner ledit second moyen porte-pièce (20).

3. Appareil selon la revendication 2, où lesdits moyens rotatifs (M21) comprennent un diviseur (21).

4. Appareil selon la revendication 1, comportant un dispositif (15) pour tenir d'une manière réversible une desdites pièces (16) ou un desdits outils (23).

5. Appareil selon la revendication 4, comportant des moyens (26, 29) pour fixer d'une manière réversible un porte-pièce (15) ou un porte-outil à ladite broche (12).

6. Appareil selon la revendication 4 ou 5, où ledit support comporte des moyens de stockage (28 ou 22) pour stocker ledit porte-pièce (15) ou ledit porte-outil (24), et où ledit moyen de transfert (40, M15, MX14, MY11, MZ12) est conçu pour transférer ledit porte-pièce (15) ou ledit porte-outil (24) entre ladite broche (12) et lesdits moyens de stockage respectifs (28 ou 22).

7. Machine-outil selon la revendication 1, caractérisée en outre par un magasin (17) pour les pièces (16) et par le fait que ledit moyen de transfert (40, M15 ou M15 et M20, MX14, MY11, MZ12) peut être actionné pour transférer ladite pièce entre ledit magasin (17) et un desdits moyens porte-pièce (15 ou 20).

8. Machine-outil selon la revendication 1, comprenant

a) un magasin (17) pour les pièces (16),

b) un poupée (11) pour porter ladite broche (12),

c) un troisième moyen porte-pièce (31) monté sur la poupée (11) en une position différente de celle de la broche (12) et comportant un moyen que l'on peut faire fonctionner automatiquement (31) pour saisir ou libérer une pièce (16),

d) la poupée (11) étant déplaçable par rapport audit magasin (17) pour le transfert d'une pièce (16) entre le magasin (17) et le second moyen porte-pièce (20), et

e) un moyen de transfert (40, M31, M30, M20, MX14, MY11) pour faire fonctionner automatiquement le troisième moyen porte-pièce (31) et pour faire subir à la poupée (11) un mouvement relatif par rapport au magasin (17) et au support (14) dans le but de transférer une desdites pièces (16) entre le magasin (17) et le second moyen porte-outil (20).

9. Appareil selon la revendication 7 ou la revendication 8, où ledit support (14) porte ledit magasin (17) et ledit second moyen porte-pièce (20) ou le second moyen porte-outil (19), et où ledit moyen de transfert (MX14, MY11) est conçu pour exécuter ledit mouvement relatif nécessaire aussi bien pour les opérations d'usinage que pour les opérations de transfert.

# Fig.1.

CONTROL SYSTEM

40

M31

M30

30

31

M15

29 MR12

32

MZ12

12

MYII

11

26

10

15

12A 16

Z

Y

X

16A

27 M27

28

MX14

14

17

13

19A

16

19

M20

16

20

M21

21

22

23

24

25

18

0 088 645

Fig. 2.

MY11

11

MX14    14    17    12    MZ12    18    13

Fig. 3.

113

111

117    12    118

0 088 645